# EUROPEAN PATENT APPLICATION

(11) **EP 3 002 571 A1**
(43) Date of publication of application: **06.04.2016**
(21) Application number: 14075063.9
(22) Date of filing: 30.09.2014
(51) Int. Cl.: G01K 7/16

(54) **A method and system for monitoring the temperature of HV potential elements of electric/electronic devices**

(71) Applicant: ABB Technology AG, 8050 Zürich (CH)
(72) Inventor: Lewandowski, Daniel, 30-384 krakow (PL); Wojcik, Mariusz, 32-552 Plaza (PL)
(74) Representative: Chochorowska-Winiarska, Krystyna

(57) **Abstract**

The subject of the invention is a method and system for monitoring the temperature of HV potential elements of electric/electronic devices using a wireless technic for transferring data. The system has two closed electric circuits, a first primary circuit (1a) for measuring current and a second secondary circuit (1b) for sensing the temperature of HV potential elements. The both circuits (1 a) and (1 b) are coupled by galvanically separated windings of transformer (3). The first primary circuit (1 a) is equipped with a square wave voltage generator (5) for generating square waves with the resonance frequency of the system. The square wave voltage generator (5) is connected with a microprocessor (6) connected with the a shant resistor (4) through current sensor (7). The microprocessor (6) is adapted to process electric signals received from the current sensor (7) and electric signals received from the variable resistor (9) through windings of the transformer (3) and calculate the resistance of the both circuits (1 a) and (1b) dependent on the temperature of HV potential elements. The microprocessor (6) is further adapted to control the operating frequency of the square wave voltage generator (5) and maintain the frequency on the resonance level.

## Description

The subject of the invention is a method and system for monitoring the temperature of HV potential elements of electric/electronic devices using a wireless technic for transferring data. The definition of HV potential in the presented invention is covered by voltage levels from 220 V up to the higest voltages occuring in power distribution and transmition systems.

### BACKGROUND OF THE INVENTION

To keep electric and electronic devices instaled in the power distribution and transmition system working properlly the set of maintence work is required. One of the action is to check temperature of critical elements working on HV potential such as busbar joints, contacts, cable connections and circuit breakers. The temperature monitoring is difficult due to high voltage potential between critical element and monitoring system. High voltage potential causes issues with electrical arc, flashover and creeping current. To solve these probles wireless temparature sensors are used.

From patent application WO 92/14999 there is known a temeperature mesuring system which is based on device which comprises a plurality of small electronics units which are placed at the measuring points so that they are at the same potential as the measuring points from an electrical point of view. The units are adapted to obtain their required drive energy from the magnetic field at the measuring point, measure the temperature, convert measured data into a message and transmit by means of light (e.g. infrared) this through the air to a receiver which is positioned at ground potential. The message is built up such that a receiver can receive measured data from several transmitters. The mentioned solution can not work properlly in duts and polluted enviroment, it requires to have magnetic field at the measuring point, it is based on complex electronics circuit which has low reliability. It is sensitive on light disturbances and it cannot work through enclousers or switchgear walls.

Another one solution which can be used to such application is temperature monitoring system based on RLC circuit with electro-magnetic field coupling.The invention described in US patent application 2011/0259960 provides solution for the identification, powering and control of products and product packaging. Enclosed embodiments include product level sensors, inductive reader networks, printed temperature sensors, product alignment systems, passive identification circuits and methods for controlling operation of the same. The method for temperature monitoring which is based on RLC circuit works as a part of power supply system with predetermined frequency and measurement is done through calculation of reflected impedance. As it is described in the mentioned patent, the RLC circuit generates a reflected impedance in response to a time varying current. The inductive reader, and in particular, the current sensor, can monitor the reflected impedance to identify one or more unique resonant frequencies corresponding to the RLC circuits. The microprocessor can reference the reflected impedance to the feedback of the RLC circuit to establish a relative reflected impedance. Using the relative reflected impedance, the microprocessor can access a reflected impedance table for that particular value of coresponding temperature. The main drawback of the invention regarding wireless temperature measuring is difficult to detect small variations in the impedance by inductive transmitter, it means the system cannot detect small variation of temperature, additionally these variations can be masked by changes in the coupling between the inductive transmitter and the RLC circuit.

In the patent WO 2013/169356 was proposed alternative solution for measuring variable impedance elements in a wireless sensor. It is based on wireless remote sensor which is powered by an inductive transmitter and is configured to produce an oscillating wave that varies based on one or more parameters. The oscillating wave is communicated to the inductive transmitter by reflected impedance, where it can be detected to determine the sensed value(s). In another aspect, the mentioned invention provides a wireless remote sensor with a Wheatstone bridge arrangement having an internal resonant circuit to produce an electro - magnetic field indicative of the sensed value. In a third aspect, the present invention provides a wireless remote sensor with optical feedback from a reference circuit and a sensor circuit. The issue with small impedance variation was solved by additional circuit which is implemented in the way that it represents a variable load that varies over time depending on the value of the parameter or parameters being measured by the wireless remote sensor with RLC circuit. This solution makes whole sensor more expensive and complex comparing to simple RLC circuit. As it was mentioned the principle of solution is to use two separate transformers, one to power the circuit and second one to measure of the impedance. There is also proposed solution with only one transformer, but it consists active componets such as diodes, operational amplifire, transistors which are not working properly long time in temperature higher than 120 Celssius degree. In other embodiment there is presented a wireless remote temperature sensor having coils printed on a material with a high coefficient of thermal expansion so that the size and/or shape of the coils varies as the temperature increases or decreases. This solution requires to have special shape of coils and close proximity, additionally it has the same limitation as sensor based on RLC circuit with reflected impedance measurement, it means that small variations in the impedance is difficult to detect and these variations can be masked by changes in the coupling between the inductive transmitter and the RLC circuit.

### SUMMARY OF THE INVENTION

A system according to the invention comprises two closed electric circuits, a first one primary circuit for measuring current and a second one secondary circuit for sensing the temperature of HV potential elements of electric/electronic devices and both electric circuits are coupled by galvanically separated windings of transformer. The transformer has a secondary windings on a HV side connected with a variable resistor. The transformer has a primary windings on a LV side connected with a current sensor. The first circuit for measuring current is equipped with a square wave voltage generator for generating square waves with the resonance frequency of the system and is connected with a microprocessor connected with the a shant resistor through current sensor. The microprocessor is adapted to process electric signals received from the current sensor and electric signals received from the variable resistor through windings of the transformer and calculate the resistance of the both electric circuits dependent on the temperature of HV potential elements of electric/electronic devices. Further the microprocessor is adapted to control the operating frequency of the square wave voltage generator and maintain the frequency on the resonance level. The primary circuit is equipped with the primary capacitor and the secondary circuit is equipped with the secondary capacitor connected in series with the variable resistor. The both circuits constitutes different RLC systems connected by galvanic separated windings of the only one transformer.

Preferably the variable resistor constitutes a sensor, sensitive to the changes in temperature in measured points by its resistance.

Preferably the variable resistor is a Pt100 sensor or a Pt1000 sensor.

Preferably the transformer is a coreless transformer.

A method according to the invention comprises the following steps 1-10:
1) placing a variable resistor at measured point/s on HV potential elements of electric/electronic devices and connecting the variable resistor and in series capacitor with a secondary windings of a transformer from HV side of the transformer,
2) powering the variable resistor by a wireless method using a mutual inductance of primary windings and secondary windings of the transformer from LV side of the transformer using a square waves generator for generating square waves with an initial frequency fg,
3) measuring a current iₖ of a shunt resistor in a primary LV side of the transformer by a microprocessor receiving electric signals from a current sensor connected to a shunt resistor,
4) calculating a new operating frequency f_{gk} in the time instant tₖ on the base of the measured current iₖ,
5) powering the variable resistor by a wireless method using a mutual inductance of a primary windings and a secondary windings of the transformer from LV side of the transformer from the square waves generator for generating square waves with the frequency f_{gk},
6) measuring a current iₖ₊₁ in a time instant tₖ₊₁ of the shunt resistor in a LV primary side of the transformer by the microprocessor receiving electric signals from the current sensor connected to the shunt resistor,
7) comparing the value of the current iₖ₊₁ with the previous value iₖ for keeping both circuits at resonance state and controlling the new generator operating frequency f_{gk} by:
8a) increasing the value of the generator frequency f_{gk} by predefined value Δ*f* when a current amplitude for iₖ₊₁ measurement is higher than the current amplitude for iₖ or
8b) decreasing the value of frequency f_{gk} by predefined value Δ*f* when the current amplitude for iₖ₊₁ measurement is lower than the current amplitude for iₖ,
9) calculating a resistance of the variable resistor on the basis of the value of the current amplitude for iₖ₊₁ measurement and a generator output voltage amplitude and next calculating a temperature of the variable resistor on the basis of calculated resistance of the variable resistor and a resistor characteristic given by the manufacturer of the variable resistor;
10) monitoring the temperature of HV potential elements in continuous way by repeating the steps from 4) to 10) for evaluating a quality of HV potential elements.

The essence of a electric/electronic device having at least one part with a HV potential elements it that in that the housing with the part with a HV potential elements is eqquipped with a secondary circiut according to claims 1-5, whereas the primary circuit according to claims 1-5 is disposed in the other housing connected mechanically to the the part with a HV potential elements and the both parts of the housings are galvanically separated from themselves.

Preferably the device with the system according to claims 1-5 is a miniature circuit breaker MCB.

### ADVANTAGES OF THE INVENTION

The main advantages of proposed solution is a simple design of the system having a minimal number of passive elements on the HV side of the transformer. Using only passive elements makes the system able to work in temperature over 120 Celssius degree. For powering a variable resistor with AC current only one transformer is used what reduces a power consuption. Using a microprocessor makes it possible that the system can automatically adjust to disturbances like changes in parameters of elements, like transformer and capacitors what improve reliability. Using magnetic coupling between primary and secondary circuits system allows for operation in the envirement with dust and poor light conditions.

### BRIEF DESCRIPTION OF THE DRAWINGS

The present invention is presented in the drawing in the exemplary embodiment where:
fig. 1 shows the system for for monitoring the temperature of HV potential elements of electric/electronic devices,

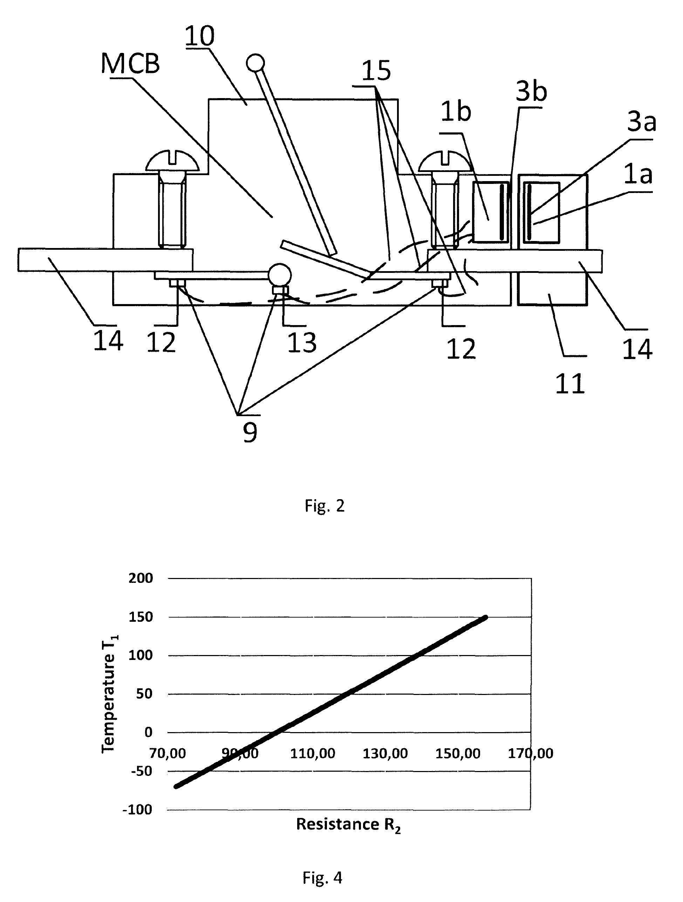

fig. 2 shows an examplary application of inventive system in miniature circuit breaker MCB,
fig. 3 shows a diagram presenting a relation between measured current amplitude and generator resonant frequency f_{R},
fig. 4 shows a diagram presenting a relation between the resistance and the temperature of Pt100 sensor,
fig. 5 shows a diagram of operations performed for monitoring the temperature of HV potential elements of electric/electronic devices in accordance with the present invention.

### DETAILED DESCRIPTION OF THE INVENTION

The system according to the invention comprises two electric circuits: the first 1a for measuring current and the second 1b for sensing the temperature. The first circuit 1 a comprises a primary capacitor 2, a primary windings 3a of transformer 3 and a shunt resistor 4 connected in series and connected to square wave voltage generator 5 and a current sensor 7 connected to a shunt resistor 4. The generator 5 is connected to microprocessor 6 to which input the current sensor 7 having a form of a shunt resistor 4 is connected. A secondary windings 3b of transformer 3 forms the other electric circuit 1 b having a secondary capacitor 8 which is connected with variable resistor 9 for temperature measurement. The transformer 3 is a coreless transformer in which the primary windings 3a forms a low voltage side and the secondary windings 3b forms a high voltage side of the transformer 3. The secondary side of the transformer 3 includes inductance incorporated from secondary windings 3b of coreless transformer 3. The wireless connection is present between primary windings 3a and secondary windings 3b of the transformer. An energy transfer does not require wired connection.

When the measurement system according to the invention is implemented in a miniature circuit breaker MCB, then the secondary side circuit 1 b is placed inside the housing 10 of the MCB and the primary side circuit 1 a is placed inside the housing 11 of a current measurement sensor CMS which is installed at the housing of MCB. The variable resistors 9 of the circuit 1 b may be installed in the points where a high voltage potential are to be expected what is mean in a places where temperature measurement brings significant information about condition of MCB. For MCB such places are disposed on MCB contacts 12 or switching 13 for connecting the cable 14. The measurement points are connected with the secondary coil 3b by cables 15.

The method according to the invention is presented in the following steps.

### Step 1)

In the step 1) a variable resistor 9 is placed at measured point/s (for example 12, 13) on a HV potential elements of electric/electronic devices and is connected with in series capacitor 8 and with a secondary windings 3b of a transformer 3 from HV side of the transformer.

### Step 2)

In the step 2) the variable resistor 9 is powered by a wireless method using a mutual inductance of primary windings 3a and secondary windings 3b of the transformer 3 from LV side of the transformer using a square waves generator 5 for generating square waves with an initial frequency f_{g}.

### Step 3)

In the step 3) a current iₖ of a shunt resistor 4 in a primary LV side of the transformer 3 is measured by a microprocessor 5, receiving electric signals from a current sensor 7 connected to a shunt resistor 4.

### Step 4)

In the step 4) a new operating frequency f_{gk} in the time instant tₖ is calculated on the base of the measured current iₖ.

### Step 5)

In the step 5) the variable resistor 9 is powered by a wireless method using a mutual inductance of primary windings 3a and secondary windings 3b of the transformer 3 from LV side of the transformer from the square waves generator 5 for generating square waves with the frequency f_{gk}.

### Step 6)

In the step 6) a current iₖ₊₁ in a time instant tₖ₊₁ of the shunt resistor 4 in a primary LV side of the transformer 3 is measured by the microprocessor 6 receiving electric signals from the current sensor 7 connected to the shunt resistor 4.

### Step 7)

In the step 7) the value of the current iₖ₊₁ is compared with the previous value iₖ for keeping both circuits 1 a and 1 b at resonance state and for controlling the generator new operating frequency f_{gk} and
when the current amplitude for iₖ₊₁ measurement is higher than the current amplitude for iₖ measurement then the step 8a) is performed in which the value of the generator frequency f_{gk} is increased by predefined value Δ*f*,
or
when the current amplitude for iₖ₊₁ measurement is lower than the current amplitude for iₖ measurement then the step 8b) is performed in which the value of the generator frequency f_{gk} is decreased by predefined value Δ*f*,

### Step 9)

In the step 9) a resistance of variable resistor 9 is calculated on the basis of the value of the current amplitude for iₖ₊₁ measurement and a generator output voltage amplitude and next a temperature of the variable resistor 9 is calculated on the basis of calculated resistance of variable resistor 9 and a resistor characteristic given by the manufacturer of the variable resistor.

### Step 10)

In the step 10) the temperature of HV potential elements is monitored in continuous way by repeating the steps from 4) to 10) for evaluating a quality of HV potential elements.

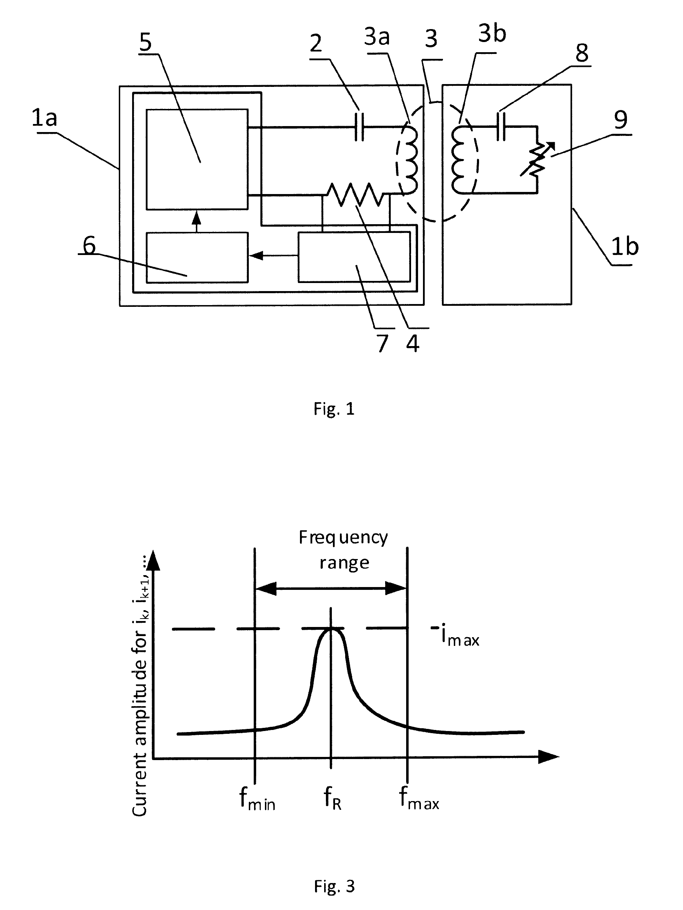

The presented method uses relation between the temperature and the resistance of the variable resistor. The resistance of the variable resistor changes because of temperature conditions changes in the measurement point - the place where current sensor 4 is installed and thus influence the current which flows through the shunt resistor 7. The primary circuit 1 a including inductance incorporated from primary winding 3a of transformer 3, capacitor 2 and shunt resistor 4 forms an active part of the transformer 3 because the power comes from the generator 5, generating variable voltage square waves at generator frequency which is controlled by the microprocessor 6. The generator frequency of voltage square waves is propagated though the system. The control goal of the microprocessor 6 is to keep the current amplitude at the highest possible value. Because the whole circuit - circuit 1 a and circuit 1 b has the resonance characteristic, typically for all RLC circuits, it has its own resonant frequency f_{R} which is determined by the current amplitude peak value, what is shown in fig. 3. The resonant frequency f_{R} is placed between the value of maximum operating frequency fₘₐₓ and minimum operating frequency fₘᵢₙ. The microprocessor 6 calculates the operating frequency f_{gk} on the basis of current measurement in the primary windings 1 b of the circuit. The measurement may be carried on by using shunt resistor 4 or any other applicable device adapted for such measurement. The measured value of the current iₖ₊₁ in the time instant tₖ₊₁ (k is a natural number) is compared by the microprocessor 6 with the current value iₖ measured in the time instant tₖ using the simplest form an algorithm for finding the resonant frequency f_{R}, for example using the frequency sweeping technique. If new measured value is bigger than previous one, the operating frequency f is increased by the predefined value Δ*f* given by the user. If the new measured value is smaller than previous one, the operating frequency is decreased by the predefined value Δ*f*. If the new measured value is higher than previous one, the operating frequency is increased by the predefined value Δ*f*. In such a way a quality of HV potential elements of electric/electronic devices is monitoring in a continuous way.

A method according to the invention ensures that a generator frequency *f_{gk}* is very near to the resonant frequency f_{R} despite operating conditions. The main disturbance comes from the mechanical dimensions and distance between transformer coils. The leakage inductance influences any current measurement by introducing phase shift. However by keeping the generator frequency at value where the current is highest what it means that the highest current amplitude is only achiveable when generator frequency is equal to resonant frequency, the influence of parasitic leakage inductance is neglected. In such conditions there is no phase shift between voltage square wave and the current flowing through the system.

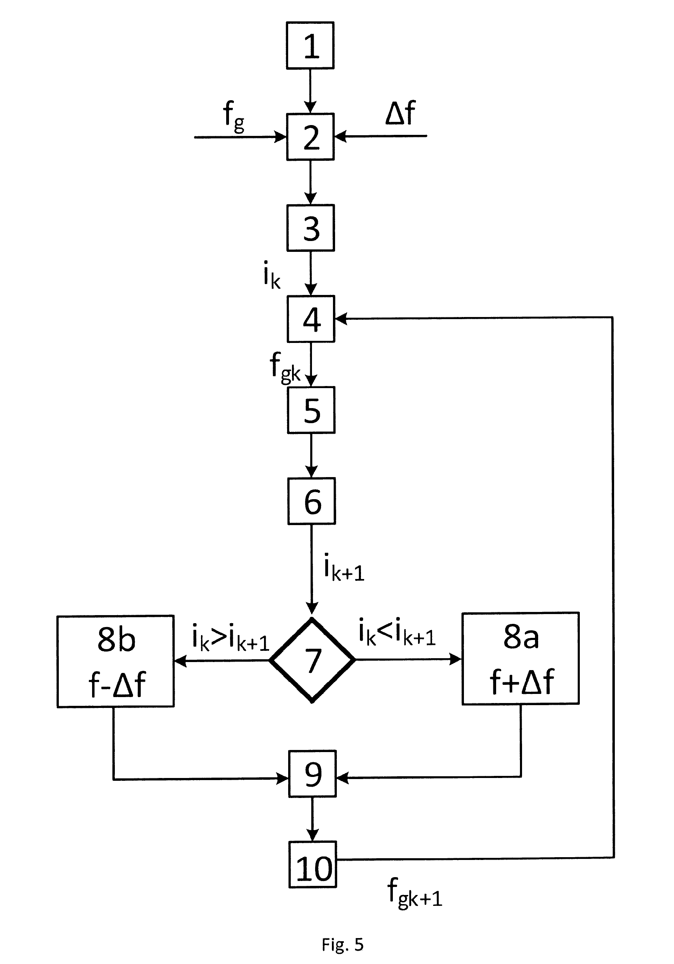

The experiment was performed to provide an exemplary data. For the experiment the test circuit was build according to presented schematic in fig. 1. As the variable resistor the potentiometer was used where its current setting models the changes in the temperature. The resistance was changed from 50 to 150 Ω. The circuit was fed by the generator which frequency was tuned according to current measured with use of shunt resistor. The generated output voltage was 5Vp-p with average frequency equal to 120 kHz. The primary and secondary windings of the coreless transformer was wounded as the flat coils separated by the 1,5 mm thick laminate layer. The coils were additionally separated by the surface of laminate. The resistance of the potentiometer *R*₁ was set according to the related temperature *T*₁. For each case the resonant frequency f_{R} was found by achieving maximum current amplitude iₘₐₓ. Knowing the value of the current amplitude and the generator output voltage amplitude, the resistance *R*₂ was calculated on the base of Ohm's law. Knowing the values of R2, the temperature T1 was calculated by using the known relation between the resistance and the temperature of Pt100 sensor. The exemplary data of the experiment is shown in a table 1 and on fig.5.

**Table 1**

| *R₁* (Ohm) | *R*₂ (Ohm) | *T*₁ (°C) |
|---|---|---|
| 80,00 | 79,94 | -50,77 |
| 100,00 | 107,66 | 0,00 |
| 120,00 | 127,23 | 51,57 |
| 140,00 | 146,21 | 103,94 |
| 160,00 | 165,54 | 157,17 |
| 180,00 | 183,75 | 211,29 |

So knowing the resitance *R*₂, temperature values can be calculated by bringing into further calculations the characteristic curve of the used sensor Pt100 or Pt1000. The temperature value comes directly (linearly in the presented temperature range) from calculated resistance *R*₂.

## Claims

1. A system for monitoring the temperature of HV potential elements of electric/electronic devices comprising two closed electric circuits, a first primary circuit (1a) for measuring current and a second secondary circuit (1 b) for sensing the temperature of HV potential elements of electric/electronic devices, where both circuits (1 a) and (1 b) are coupled by galvanically separated windings of transformer (3), where the transformer (3) has a secondary windings (3b) on a HV side of the transformer (3) connected with a variable resistor (9) and where the transformer (3) has a primary windings (3a) on a LV side of the transformer (3) connected with a current sensor (7) characterised it that the first circuit (1a) for for measuring current is equipped with a square wave voltage generator (5) for generating square waves with the resonance frequency of the system and the square wave voltage generator (5) is connected with a microprocessor (6) connected with the a shant resistor (4) through current sensor (7) and where the microprocessor (6) is adapted to process electric signals received from the current sensor (7) and electric signals received from the variable resistor (9) through windings of the transformer (3) and calculate the resistance of the both circuits (1 a) and (1 b) dependent on the temperature of HV potential elements of electric/electronic devices and further is adapted to control the operating frequency of the square wave voltage generator (5) and maintain the frequency on the resonance level; the primary circuit (1a) is equipped with the primary capacitor (2) and the secondary circuit (1 b) is equipped with the secondary capacitor (8) connected in series with the variable resistor (9), and the both circuits (1a) and (1 b) constitutes different RLC systems connected by galvanic separated windings (3a) and (3b) of the only one transformer (3).

2. A system according to claim 1 is **characterised in that** the variable resistor (9) costitutes a sensor, sensitive to the changes in temperature in measured points by its resistance.

3. A system according to claim 2 is **characterised in that** the variable resistor (9) is a Pt100 sensor or Pt1000 sensor.

4. A system according to claim 1 is **characterised in that** the transformer (3) is a coreless transformer.

5. A method for monitoring the temperature of HV potential elements of electric/electronic devices, **characterised in that** that it comprises the following steps:
1) placing a variable resistor (9) at measured point/s on a HV potential elements of electric/electronic devices and connecting the variable resistor (9) and in series capacitor (8) with a secondary windings (3b) of a transformer (3) from HV side of the transformer (3),
2) powering the variable resistor (9) by a wireless method using a mutual inductance of primary windings (3a) and secondary windings (3b) of the transformer (3) from LV side of the transformer (3) using a square waves generator (5) for generating square waves with an initial frequency f_{g},
3) measuring a current iₖ of a shunt resistor (4) in a primary LV side of the transformer (3) by a microprocessor (5) receiving electric signals from a current sensor (7) connected to a shunt resistor (4),
4) calculating a new operating frequency f_{gk} in the time instant tₖ on the base of the measured current iₖ,
5) powering the variable resistor (9) by a wireless method using a mutual inductance of primary windings (3a) and secondary windings (3b) of the transformer (3) from LV side of the transformer (3) from the square waves generator (5) for generating square waves with the frequency f_{gk},
6) measuring a current iₖ₊₁in a time instant tₖ₊₁ of the shunt resistor (4) in a primary LV side of the transformer (3) by the microprocessor (6) receiving electric signals from the current sensor (7) connected to the shunt resistor (4),
7) comparing the value of the current iₖ₊₁ with the previous value iₖ for keeping both circuits (1 a) and (1 b) at resonance state and for controlling the generator new operating frequency f_{gk} by:
8a) increasing the value of the generator frequency f_{gk} by predefined value Δ*f* when a current amplitude for iₖ₊₁ measurement is higher than the current amplitude for iₖ or
8b) decreasing the value of frequency f_{gk} by predefined value Δ*f* when the current amplitude for iₖ₊₁ is lower than the current amplitude for iₖ,
9) calculating a resistance of variable resistor (9) on the basis of the value of the current amplitude for iₖ₊₁ measurement and a generator output voltage amplitude and next calculating a temperature of the variable resistor (9) on the basis of calculated resistance of variable resistor (9) and a resistor characteristic given by the manufacturer of the variable resistor;
10) monitoring the temperature of HV potential elements in continuous way by repeating the steps from 4) to 10) for evaluating a quality of HV potential elements.
A method according 5 is **characterized in that** as the variable resistor (9) a sensor Pt100 or Pt1000 are used.

6. An electric/electronic device having at least one part with HV potential elements, **characterising in that** the housing with the part with HV potential elements is eqquipped with a secondary circiut according to claims 1-5, whereas the primary circuit according to claims 1-5 is disposed in the other housing connected mechanically to the housing with the part with a HV potential elements and the both parts of housings are galvanically separated from themselves.

7. The device according to claim 7, **characterized in that** it is a miniature circuit breaker MCB.
